(19)

**Europäisches Patentamt**

**European Patent Office**

**Office européen des brevets**

(11) **EP 3 222 346 A1**

(12) **EUROPEAN PATENT APPLICATION**
published in accordance with Art. 153(4) EPC

(43) Date of publication:
**27.09.2017 Bulletin 2017/39**

(21) Application number: **15850139.5**

(22) Date of filing: **14.10.2015**

(51) Int Cl.:
*B01J 23/52* [(2006.01)]     *B01J 23/72* [(2006.01)]
*B01J 23/80* [(2006.01)]     *B01J 21/04* [(2006.01)]
*B01D 53/62* [(2006.01)]     *C01B 3/16* [(2006.01)]
*H01M 8/06* [(2016.01)]

(86) International application number:
**PCT/ES2015/000138**

(87) International publication number:
**WO 2016/059268 (21.04.2016 Gazette 2016/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **14.10.2014 ES 201400824**

(71) Applicants:
• **Universidad De Sevilla**
  **41013 Sevilla (ES)**
• **Consejo Superior De Investigaciones Científicas**
  **28006 Madrid (ES)**

(72) Inventors:
• **ODRIOZOLA GORDÓN, José Antonio**
  **41013 - Sevilla (ES)**

• **SVETLANA LYUBOMIROVA, Ivanova**
  **41013 - Sevilla (ES)**
• **SANTOS MUÑOZ, José Luis**
  **41013 - Sevilla (ES)**
• **CENTENO GALLERO, Miguel Ángel**
  **41092 Sevilla (ES)**
• **RAMÍREZ REINA, Tomás**
  **41092 Sevilla (ES)**
• **TODOROVA TABAKOVA, Tatyana**
  **Sofia 1113 (BG)**
• **DANAILOV IDAKIEV, Vasko**
  **Sofia 1113 (BG)**
• **IVANOV BOGOEV, Ivan**
  **Sofia 1113 (BG)**

(74) Representative: **Pons**
  **Glorieta Ruben Dario 4**
  **28010 Madrid (ES)**

(54) **GOLD CATALYST SUPPORTED IN CUO/ZNO/Al203, PRODUCTION METHOD AND USE THEREOF**

(57)     The invention relates to the synthesis and application of gold catalysts supported in mixed CuO/ZnO/Al$_2$O$_3$ oxides prepared on the basis of their corresponding solids with a hydrotalcite structure as catalysts in the displacement reaction of gas from water, for use in fuel processors coupled to fuel cells..

Figure 1

EP 3 222 346 A1

**Description**

**Field of the art**

The invention relates to the technical field of renewable energies, more specifically to the development of catalysts and their application in the water-gas shift reaction (WGS) for use in fuel processors coupled to fuel cells.

**State of the art**

Currently, hydrogen-fed PEM-type fuel cells are one of the most attractive energy production devices due to their high-energy efficiency and low levels of pollutant emission, and are earmarked to play a relevant role in the energy system of the future.

Hydrogen for use as fuel can be generated from fossil fuels (such as coal, hydrocarbons and natural gas) or from other renewable sources, such as biomass. At present, the processes most widely used for such purpose continue to be steam-reforming, autothermal-reforming and partial alcohol and hydrocarbon oxidation processes, although in the near future the use of renewable sources must and will account for the majority. Furthermore, the hydrogen stream produced in the reformer contains not only hydrogen, but also other gases, typically $CO_2$, $H_2O$ and CO, in varying amounts, depending on the reforming process, operating conditions and fuel used, and may have a content of 15-25% $CO_2$, 10-30 % $H_2O$ and 3-10 % CO. Furthermore, PEM fuel cells must be fed with a nearly pure hydrogen stream, since tolerance to certain components is very low. Specifically, the presence of carbon monoxide (CO) in the stream, even at trace levels (typically >10 ppm) is poisonous to the battery anode catalyst (normally based on Pt or Pt-Ru), since it is absorbed thereon, causing cell deactivation. Although physical methods for removing CO from these streams have been studied, catalyst processes have proven more efficient, such as the water-gas shift reaction (WGS, Equation 1) and the Preferential CO Oxidation Reaction in the presence of the $H_2$ (PrOx, Equation 2).

$$CO + H_2O \leftrightarrow CO_2 + H_2 \Delta H^0 = - 41.2 \ KJ/mol \qquad (Eq.1)$$

$$CO + \tfrac{1}{2} O_2 + \rightarrow CO_2 \ \textbf{(in } H_2 \textbf{ stream)} \qquad \Delta H^0 = - 283 \ KJ/mol (Eq.2)$$

One of the most widely studied aspects is the development of highly efficient, novel catalysts for the water-gas shift reaction (WGS).

The WGS process constitutes the obligatory cleaning stage (removal) of CO from the hydrogen streams, since quantities of up to 9-11 % of CO can reach the WGS unit. Two aspects are relevant in accordance with the characteristics of the reaction and with the integrated nature of the hydrogen production and cleaning process.

1) With respect to the reaction itself, it is a reversible and exothermic process ($\Delta H o$ = -41.2 kJ/mol). Precisely due to the fact that it is a moderately exothermic process, the WGS reaction is thermodynamically unfavoured at high temperatures. However, from a kinetic viewpoint, the catalytic process is more favourable at high temperatures. Therefore, in order to overcome this thermodynamic limitation, maintaining high reaction speeds, the reaction usually takes place in multiple adiabatic stages; thus, for example, the high temperature shift (HTS) is normally the first stage with high operating temperatures (350°C-600°C), while the low temperature shift (LTS) occurs as a second stage with a temperature range comprised between 150°C and 300 °C, inserting an intermediate cooling stage to obtain high global conversion.

2) The second aspect to be considered is that the WGS reactor is usually, by far, the largest of the integrated process, since the water-gas shift reaction is favoured at low spatial velocities. To facilitate the implementation of this technology in mobile applications, the reduction in reactor volume is of vital importance. In this regard, the development of catalysts capable of carrying out the WGS reaction at high spatial velocities constitutes one of the greatest challenges in this scientific problem.

In general, four types of catalysts are identified for the WGS reaction:

- Promoted iron oxide-based catalysts that shift at slightly higher temperatures (350-450 °C) and are therefore used in high temperature (HTS) WGS.
- Copper-zinc mixed oxide catalysts, typically known as low temperature shift catalysts (LTS) because they are used at relatively low temperatures (190-250°C).

- The third type of catalysts use cobalt and molybdenum sulphides as active phases and are resistant to sulphur poisoning.
- Lastly, the fourth type of catalysts consists of those that operate at intermediate temperatures (MTS), usually between the HTS and LTS catalysts.

They are normally copper-zinc catalyst such as those used in LTS but modified (usually with iron oxide) to operate slightly higher temperatures (275-350°C) than the typical LTS catalysts.

Given that commercial catalysts for the low-temperature WGS reaction (typically CuO/ZnO mixtures) have a series of drawbacks, such as for example their pyrophoricity, their need for previous activation treatment and, in many cases, their deactivation due to sintering of the metal particles, catalysts based on noble metals (basically Au and Pt) are in fact widely studied as an alternative to the aforementioned commercial catalysts. In particular, catalysts that use gold as the active phase have been studied in detail with promising results in the last decade. Gold-based catalysts offer advantages in the 180-250°C temperature range, where Pt group catalysts are not sufficiently active [D. Andreeva, I. Ivanov, L. Ilieva, J.W. Sobczak, G. Avdeev, T. Tabakova, "Nano-sized gold catalysts supported on ceria and ceria-alumina for WGS reaction: Influence of the preparation method"; Appl. Catal. A: Gen, Volume 333, 2007, Page 153-160]. For example, they are not pyrophoric and do not require any type of special treatment prior to use. Recently, [Robbie Burch, "Gold catalysts for pure hydrogen production in the water-gas shift reaction: Activity, structure and reaction mechanism" Phys. Chem. Chem. Phys., 2006, Volume 8, Page 5483-5500] the advantages and drawbacks of gold catalysts for the WGS reaction have been summarised. It is well established that, in the case of gold catalysts, the preparation method and pre-treatment greatly influence the subsequent catalytic activity. The wide disparity in the behaviour of published gold catalysts is attributed essentially to the method for preparing the gold nanoparticles and to the wide diversity of supports used. However, there is general consensus in the importance of using an active support and, more specifically, $CeO_2$ as a support for metal nanoparticles for the WGS reaction [Andreeva, D., Ivanov, I., Ilieva, L., Sobezak, J.W., Avdeev, G., Petrov, K. (2007) "Gold-based catalysts on ceria and ceria-alumina for WGS reaction (WGS Gold catalysts"; Topics in Catalysis, Volume 44, (1-2), Page 173-182.]. The main advantage of gold-based catalysts is that they make it possible to operate at low reaction temperatures where the thermodynamic limitation is practically null, making it possible to reach high CO conversions.

Patent documents disclose the use of CuO-ZnO mixtures as efficient systems in the WGS reaction. For example, a system widely used in the industry is that developed by Larson in the sixties (US1797426 *Manufacture of hydrogen*). More recently, patents filed by Farrauto and collaborators allude to the use of Pt supported on $CuO-CeO_2-Al_2O_3$ mixtures (US20020147103 *Enhanced stability water-gas shift reaction catalysts* and US20020061277 *Non-pyrophoric water-gas shift reaction catalysts*). In these catalysts, the use of cerium dioxide reduces pyrophoricity and increases stability. This is especially relevant in relation to industrial applications, as proposed in Shore's patent (US6913739 *Platinum group metal-promoted copper oxidation catalysts and methods for carbon monoxide remediation),* which places emphasis on the fact that the non-pyrophoric nature of the WGS catalyst is crucial to possible start/stop events. The same inventors designed Pt-based catalysts for WGS with scarce methane production (US20030230029 *Suppression of methanation activity of platinum group metal water-gas shift catalysts*). Catalysts with the formula $Fe_2O_3/CuO/ZnO/Al_2O_3$ have been applied very effectively in the WGS reaction at intermediate temperatures, and the preparation and use thereof is included in the patent (US7964114 B2 *Iron-based water-gas shift catalysts*). The use of Fe-Al-Cu systems with different Fe/Cu ratios is also patented as highly effective catalysts for hydrogen production from WGS (US 7947251 B2 *Catalyst for hydrogen production from water-gas shift reaction).* The conventional $CuO/ZnO/Al_2O_3$ system can be enhanced by adding promotors. The patent (US 6627572 B1 *Water-gas shift catalyst*) explains how promoting the aforementioned system with elements chosen from K, Rb, Cs as alkali and metals such as Ti, V, Mn, Mo, Zr, Ru, Pd, Re, La, Ce, Ba and Rh enhances the catalyst in the WGS process. This strategy of promoting the aforementioned CuO/ZnO system with alkaline elements has been used since the nineties, as disclosed in the patent by Klier and collaborators (US 5021233 *Water-gas shift reaction alkali-doped catalysts*).

As regards gold, a small percentage of patents disclose the application of gold-containing systems (WGS) for producing hydrogen. Said patents usually allude to the preparation of the catalysts (for example, Au on zirconium sulphate) for this application (US2007128100 *Method for making hydrogen using a gold-containing catalyst* [2007]) or even disclose that gold catalysts may have more than one function, for example the application of gold-based catalysts for WGS with the object of obtaining hydrogen and simultaneously the use of the same catalysts in CO oxidation (US2008089823, *Method For Making Hydrogen Using A Gold-Containing Water-Gas Shift Catalyst,* 2008).

The deposition of gold in compounds having a pyrochlore structure (US2007269359 *Compound having a pyrochlore structure and its use as a catalyst carrier in the water-gas shift reaction,* 2007) and in metal oxides (cerium and/or zirconium) wherein at least 40 % of the gold is present as $Au^{3+}$ (WO2005087656 *Water-gas shift catalyst,* 2005) has also given rise to patents in this field.

The Japanese National Institute of Advanced Industrial Science and Technology has also filed three patents for the WGS reaction that include gold in the composition of their catalysts. One with a catalyst based on gold and copper oxide (JP20020129816 20020501, *Catalyst for water-gas shift reaction,* 2003), another with catalysts having an arbitrary composition, where at least one metal oxide of the following elements is present: Mg, Al, Mn, Fe, Co, Ni, Zn, Zr or Ce (JP2004009011 *Catalyst for water-gas shift reaction*). And in the third patent, a catalyst for WGS is proposed in a reformed gas stream composed of gold and metal oxides whose cations have Pauling electronegativity in the 10-14 range (JP2004066003, *Catalyst for water-gas shift reaction of fuel-reformed gas*).

The Korean Institute of Science and Technology has also filed patents alluding to WGS, in this case with catalysts based on Au, Ag, Cu, Ni, Zn, Cr and Al supported on a ceramic. Said ceramic may be cerium, zirconium, bismuth-based perovskite or bismuth oxides (KR20040036106, *Catalyst of ceramic supported on metal for water-gas shift reaction and method for preparing the same,* 2004).

However, the scientific articles or patents disclosed do not include references to the use of a combined system based on the $CuO/ZnO/Al_2O_3$ and noble metal system. The possible combination of added-value properties of the two types of catalysts would therefore be desirable as an alternative to the requirements for their use in portable energy-producing devices.

The present invention focuses on the synthesis and application of gold catalysts supported on mixed $CuO/ZnO/Al_2O_3$ oxides with different CuO/ZnO ratios and prepared from their corresponding solids with hydrotalcite structure as highly efficient catalysts in the WGS reaction.

**Explanation of the invention**

In a first aspect, an object of the present invention is a gold-containing catalyst supported on $CuO/ZnO/Al_2O3$, comprising between 10% and 80 % of $Al_2O_3$ and between 90 % and 20 % of CuO/ZnO.

In successive embodiments, the $CuO/ZnO/Al_2O_3$ support precursor has a hydrotalcite structure with the following proportions between the compounds:

- Cu+Zn/Al ratio comprised between 0.5 and 3
- Cu/Zn ratio comprised between 1 and 6.

and the following percentages by weight:

- from 0.5 to 4 % w/w of Au
- from 10 to 90 % w/w of CuO/ZnO.

In a second aspect, another object of the present invention is the method for preparing the above-referenced catalyst, comprising the following stages:

- synthesis of hydrotalcites as $CuO/ZnO/Al_2O_3$ mixed oxide precursors,
- deposition of gold on the $CuO/ZnO/Al_2O_3$ substrate.

In a preferred embodiment, the synthesis of hydrotalcites takes place by means of co-precipitation at low oversaturation of Cu, Zn and Al salts at a pH comprised between 7 and 10 and temperatures comprised between 20 °C and 80 °C. Preferably, the salts used as precursors are $Cu(NO_3)_2.2H_2O$, $Zn(NO_3)_2.6H_2O$ and $Al(NO_3)_3.9H_2O$ and 1M $Na_2CO_3$ is used as a precipitation agent, maintaining the precipitation for a period of 48 hours. After the precipitation, it is dried at a temperature comprised between the ambient temperature and 100°C, followed by subsequent calcination at 300°C for 4 hours with a ramp of 10°C/min. In another preferred embodiment of the method of the invention, Au deposition is performed by means of direct anionic exchange assisted by $NH_3$, using an aqueous $HAuCl_4$ solution to which the support is added. Another way of performing Au deposition is by means of deposition-precipitation, wherein Au is deposited in the form of auric hydroxide on the oxide layers under agitation at a constant pH.

In a third aspect, another object of the present invention is the use of the catalyst in the water-gas shift reaction. In a preferred embodiment, the reaction occurs in reactive streams with a composition comprising:

- between 4.5 % and 9 % of CO
- between 0 and 11 % of $CO_2$
- between 30 and 50 % of $H_2O$

wherein the reaction takes place at a temperature comprised between 140 and 350 °C and a spatial velocity of between 4,000 and 8,000 $h^{-1}$.

**Brief description of the figures**

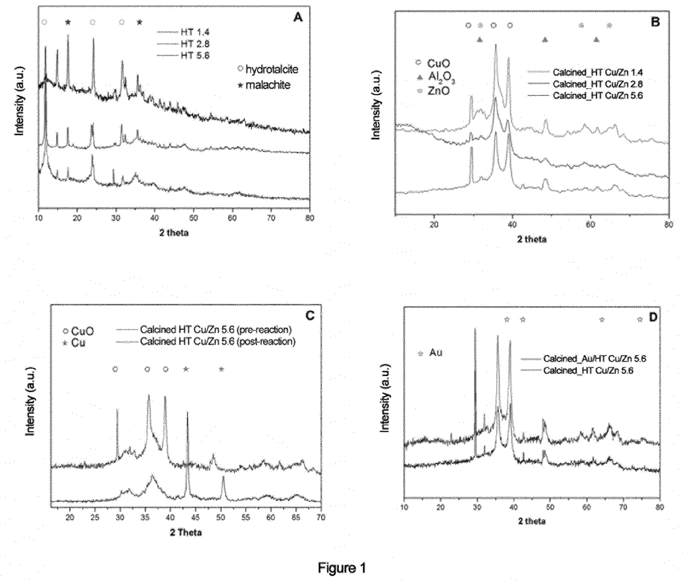

**Figure 1.-** X-Ray diffraction patterns

A) X-Ray diffraction patterns of the non-calcined samples.
B) X-Ray diffraction patterns of the calcined sample.
C) Comparison of the diffraction patterns of a pre-reaction calcined sample with the same sample after use thereof in WGS.
D) Comparison of a calcined mixed oxide with its corresponding gold-containing catalyst.

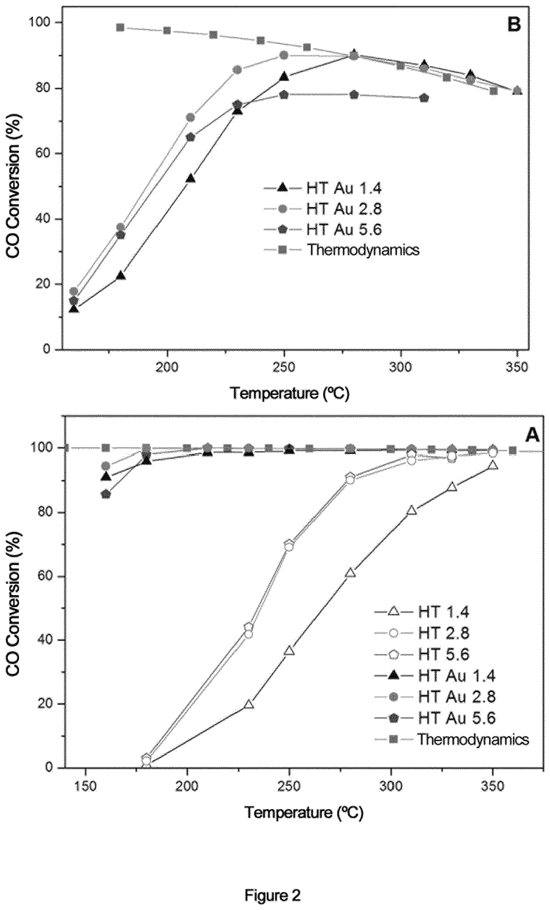

**Figure 2.-** Results of catalytic activity in WGS of the systems where $M^{2+}/M^{3+}$ remained constant at 1 and the gold was deposited by means of the assisted anionic exchange method.

A) Comparison of the activity of the mixed oxides with those of their corresponding gold catalysts supported under ideal conditions (mixture of the described model).
B) Comparison of the activity of the mixed oxides with those of their corresponding gold catalysts supported under the described industrial conditions.

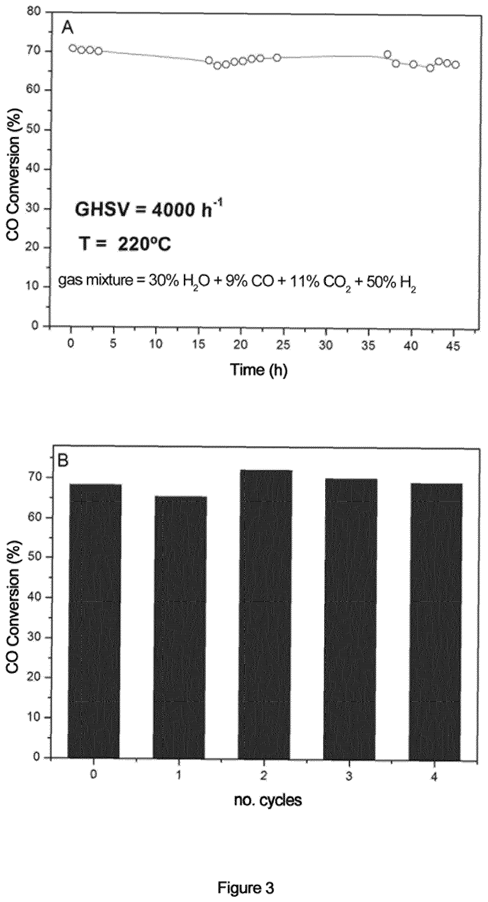

**Figure 3.-** Au/HT_2 catalyst

A) Continuous stability under real operating conditions.
B) *Start*/*stop* cycles under industrial mixture.

**Detailed description of the invention**

The present invention relates to the synthesis and application of gold catalysts supported on mixed $CuO/ZnO/Al_2O_3$ oxides prepared from their corresponding solids with a hydrotalcite structure as catalysts in the WGS reaction.

Firstly, the invention describes the synthesis of mixed copper zinc and alumina oxides ($CuO/ZnO/Al_2O_3$) in an extraordinarily controlled manner through the use of a defined hydrotalcite-type structure as a precursor thereof. As a result, these solids are stable with respect to the significant sintering, which is reflected in a constant and long-lasting catalytic activity.

The addition of a minimum quantity of gold gives rise to a maximum increase (maximum permitted by the thermodynamics in the temperature window of 140-250 °C) of the activity, to which other advantages are added such as the omission of the catalyst pre-conditioning stage, reduction of its deactivation, increase in its durability and significant stability in the event of changes in flow or temperature or start/stop cycles.

Synthesis of hydrotalcites as a $CuO/ZnO/Al_2O_3$ precursor

The synthesis of hydrotalcites as $CuO/ZnO/Al_2O_3$ mixed oxide precursors takes place by means of co-precipitation under oversaturation, where the salts and alkaline solution are slowly added, ensuring that the pH and temperature remain constant. The most widely used conditions are: between 10-80 % in w/w of $Al_2O_3$ and 90-20 % in w/w of CuO/ZnO; pH between 7 and 10 (pH at which most hydroxides precipitate); temperatures between 20° and 80°C; under concentrations and flows of reagents; washing after filtration with hot water, to fully remove the sodium ions; and drying at low temperatures (maximum 120°C).

First, an aqueous $Na_2CO_3$ solution with a concentration of 1 M is prepared as a precipitation agent. Next, the necessary quantity of each of the precursors used is deposited in a 1 L beaker. In all cases, the precursors used were the nitrates of said metals, Cu $(NO_3)_2·2H_2O$, Zn $(NO_3)_2·6H_2O$, Al $(NO_3)_3·9H_2O$, since it does not generate solid residue and makes it possible to obtain cleaner hydrotalcite. These were dissolved in a volume of 0.8 L of distilled water and magnetically agitated throughout the precipitation phase. The resulting colour of the dissolution is sky blue, characteristic of copper hydrotalcites. The precipitation of the hydroxides is maintained for a period of 48 hours. Next, it is left to dry at a temperature below 100 °C, to which end a heater may be used, or left to dry at room temperature for a couple of days. Lastly, after the drying phase, the sample is calcined. Lastly, the samples were calcined at a temperature of 300 °C and a heating ramp of 10 °C/min for a period of 4 hours.

This process has two major advantages: on the one hand, it makes it possible to integrate a large group of anions and cations in the structure and, on the other, the large-scale preparation thereof is less complex.

Gold deposition method

Two different gold impregnation methods were used. In both gold deposition methods, loads of 0.5 % - 4 % (w/w) of gold were swept.

1) Ammonia-assisted direct anionic exchange method [S. Ivanova, C. Petit, V. Pitchon, "A new preparation method for the formation of gold nanoparticles on an oxide support" Applied Catalysis A-General Volume 267, 2004, Page 191-201].
Said method consists of taking an aqueous solution of $HAuCl_4$, with concentrations of $10^{-4}$ M, which is heated to a temperature of approximately 70°C. Once said temperature is reached, the support is added to the solution and the mixture is left in agitation for 20 minutes. After said period of time has elapsed, the solution is cooled to approximately 40 °C and 20 mL of $NH_3$ 30 % (v/v) are added. It is agitated again for 20 minutes, filtered and the solid collected. Lastly, it is dried and calcined at 300°C for 4 hours.
2) Deposition-precipitation method [D. Andreeva, T. Tabakova, V. Idakiev, P. Christov, R. Giovanoli, "Au/alpha-Fe2O3 catalyst for water-gas shift reaction prepared by deposition-precipitation" Applied Catalysis A-General Volume 169, 1998, Page 9-14].
Precipitation was performed by means of an automated system (Contalab) that makes it possible to control all the precipitation parameters (pH, temperature, agitation speed, reagent feed flow, etc.). The gold is deposited in the form of Auric Hydroxide, $Au(OH)_3$, on the oxide layers, under vigorous agitation, maintaining a constant pH of 7. After filtration and thorough washing, the precursors were vacuum-dried and calcined in air at 400 °C for 2 hours.

**Embodiment of the invention**

By way of example, following is a description of the most representative results of a series of gold catalysts supported on mixed $CuO/ZnO/Al_2O_3$ oxides, which are not intended to be representative of their scope.

Chemical composition

The elemental analysis was performed using X-Ray micro fluorescence spectrometry (XRMFS) in an EDAX Eagle III spectrometer with a rhodium source of radiation.
In order to synthesize a series of precursor hydrotalcites of the $CuO/ZnO/Al_2O_3$ mixed oxides, $M^{2+}/M^{3+}$ ratios from 1 to 6 were swept. Additionally, for each one of these $M^{2+}/M^{3+}$ ratios, the $M^{2+}/M^{2+}$ ratio was varied between 1 and 6. Table 1 includes the ratios of some of the representative $M^{2+}/M^{3+}$ ratios.

**Table 1.** $M^{2+}/M^{3+}$ ratios for the synthesis of hydrotalcites

| (Cu+Zn)/Al Molar Ratio | 0.5 | 2 | 3 |
|---|---|---|---|

As with the $M^{2+}/M^{3+}$ ratio, some of the different $Cu^{2+}/Zn^{2+}$ molar ratios that were prepared are exemplified in Table 2.

**Table 2.** $M^{2+}/M^{2+}$ ratios for the synthesis of hydrotalcites

| Cu/Zn Molar Ratio | 1.4 | 2.8 | 5.6 |
|---|---|---|---|

The objective pursued is to perform a representative sweep of the ratios in order to find or at least come as close as possible to the ideal M(II)/M(II) ratio.
Table 3 shows the composition of some of the solids prepared (HT) maintaining the $M^{2+}/M^{3+}$ ratio constant at 1, where $M^{3+}$ is $Al^{3+}$ and $M^{2+}$ is a mixture of $Cu^{2+}/Zn^{2+}$ whose $Cu^{2+}/Zn^{2+}$ ratio varies between 1.4 and 5.6.

**Table 3.** Chemical composition of some of the solids prepared, maintaining $M^{2+}/M^{3+}$ constant.

| Sample | CuO (%) | ZnO (%) | Al$_2$O$_3$ (%) | Theoretical Cu/Zn Ratio | Real Cu/Zn Ratio |
|---|---|---|---|---|---|
| HT 1.4 | 35.82 | 25.97 | 38.21 | 1.4 | 1.38 |
| HT 2.8 | 17.40 | 47.73 | 34.87 | 2.8 | 2.74 |
| HT 5.6 | 51.95 | 10.34 | 37.71 | 5.6 | 5.02 |

In all cases, a Cu/Zn ratio close to the targeted ratio in the synthesis was achieved.

The X-Ray diffraction analysis (XRD) was performed on an X'Pert Pro PANalytical X-Ray diffractometer. The diffraction patterns were recorded using the K$\alpha$ radiation of Cu (40 mA, 45 kV) in a range of 20 comprised between 3° and 80° and a sensitive detector position using a sieve size of 0.05° and a passage time of 240 s. The XRD patterns of the synthesized solids are shown in Figure 1.

Figure 1A shows the X-Ray diffraction patterns of the non-calcined samples. In all cases the typical hydrotalcite signals are obtained and a certain proportion of malachite phase appears. After calcining the sample, Figure 1B, the CuO-ZnO-Al$_2$O$_3$ mixed oxide is obtained, as shown by the reflections of the diffractogram. Figure 1C shows a comparison between the diffraction patterns of a pre-reaction calcined sample and the same sample after its use in WGS. It can be clearly observed how the copper oxide is reduced to metal copper during the reaction. The latter is the active species in the water-gas shift. Lastly, Figure 1 D shows a comparison between a calcined mixed oxide and its corresponding gold-containing catalyst. Typical reflections of metal gold or of any other gold species were not observed, which indicates that the gold nanoparticles are small (they are smaller than 5 nm in size, which is the detection limit of the diffractometer) and are well dispersed on the CuO-ZnO-Al$_2$O$_3$ mixed oxide.

The WGS reaction was carried out in a proprietary design diffractometer. The typical gas mixtures used for the water-gas shift reaction were:

*Model Mixture:* 4.5 % CO in Ar (Abelló Linde); 30 % H$_2$O (0.024 mL/min H$_2$O (I). *Industrial Conditions (imitating the outlet of an ethanol reformer):* 9% CO (Abelló Linde); 11 % CO$_2$ (Abelló Linde); 50 % H$_2$ (Abelló Linde); 30 % H$_2$O (0.024 mL/min H$_2$O (I).

Figure 2 shows the results of catalytic activity of the systems where M$^{2+}$/M$^{3+}$ remained fixed at 1 and the gold was deposited by means of the assisted anionic exchange method. Figure 2A shows a comparison of the activity of the mixed oxides with that of their corresponding gold catalysts supported under ideal conditions (previously described model mixture). Within the mixed oxides, CuO/ZnO = 2.8 and 5.6 seem to be the optimum ratios, reaching equilibrium conversions of 330 °C. The activity of the gold systems is very superior to that of their corresponding supports. Equilibrium reductions are achieved practically from the start of the reaction, making these systems very promising and superior catalysts to the current low-temperature water-gas shift industrial systems. In figure 2B, the supported gold systems are tested under realistic operating conditions (previously described industrial conditions). The solids with Cu/Zn ratios = 1.4 and 2.8 reached equilibrium at 270 °C and the Au_HT 2.8 system was the most active in the entire temperature range studied.

Frequently, from the industrial viewpoint, the stability of the catalyst is more important than the catalytic activity itself and this stability under operating conditions is a determining factor when selecting a catalyst. Figure 3A shows the stability of one of the Au/CuO-ZnO/Al$_2$O$_3$ systems synthesized by means of the deposition-precipitation method under industrial conditions. Specifically, it is a system with a (Cu + Zn)/Al ratio = 2 and a Cu/Zn ratio = 5.6, called Au/HT_2. The catalyst slightly loses activity in the first 14 hours of operation (from 70 % to 65% of CO conversion). After said period has elapsed, the stationary state is reached and CO reduction remains high and stable. It should be noted that the temperature of the stability test is very low (220°C) and, therefore, the performance of this catalyst, considering the high activity and good stability shown at such a low temperature, is excellent and exceeds that of the CuO/ZnO-based catalysts currently used in the industry for the low temperature water-gas shift reaction.

In addition to continuous stability, it is of vital importance to verify catalyst resistance in start/stop cycles. Start/stop cycles imply lowering the temperature of the reaction mixture to room temperature (approximately 30 °C) and maintaining said situation for 40 minutes (always with the gases and water flowing through the catalytic bed). After said period, the system is heated again up to the stability test temperature (220 °C). This implies that the catalyst will come into contact with liquid water. The selected catalyst was capable of successfully tolerating up to four start/stop cycles without showing any deactivation. This result is quite promising and makes the catalysts studied very adequate for WGS processes in both stationary and portable applications.

It should be noted that in all the catalytic tests the reaction mixture, once stabilised, is made to flow directly over the catalyst. In other words, no treatment is performed prior to activation. The catalysts are activated directly in the reaction mixture, which implies an additional advantage with regard to possible applications in fuel processors that work in continuous mode.

The overall activity and stability results are quite satisfactory taking into account the characteristics offered by the catalysts currently available in the market, making these systems promising candidates for direct application thereof in real hydrogen stream purification processes.

**Claims**

1. A catalyst comprising gold supported on CuO/ZnO/Al$_2$O3, **characterised in that** it comprises between 10 % and 80 % of Al$_2$O$_3$ and between 90 % and 20 % of CuO/ZnO.

2. The catalyst, according to claim 1, **characterised in that** the CuO/ZnO/Al$_2$O$_3$ support precursor has a hydrotalcite structure.

3. The catalyst, according to any one of claims 1 and 2, **characterised in that** the Cu+Zn/Al ratio is comprised between 0.5 and 3.

4. The catalyst, according to any one of claims 1 to 3, **characterised in that** the Cu/Zn ratio is comprised between 1 and 6.

5. The catalyst, according to any one of claims 1 to 4, **characterised in that** it comprises:

   - between 0.5 % and 4 % w/w of Au
   - between 10 % and 90 % w/w of CuO/ZnO

6. A method for preparing a catalyst, as defined in claims 1 to 5, comprising the following stages:

   - synthesis of hydrotalcites as CuO/ZnO/Al$_2$O$_3$ mixed oxide precursors,
   - deposition of gold on the CuO/ZnO/Al$_2$O$_3$ substrate.

7. The method, according to claim 6, **characterised in that** the synthesis of hydrotalcites takes place by means of co-precipitation at a low supersaturation of Cu, Zn and Al salts at a pH comprised between 7 and 10 and temperatures comprised between 20°C and 80°C.

8. The method, according to claim 7, **characterised in that** Cu(NO$_3$)$_2$.2H$_2$O, Zn(NO$_3$)$_2$.6H$_2$O and Al(NO$_3$)$_3$.9H$_2$O are used as precursors and Na$_2$CO$_3$ 1M as a precipitation agent, said precipitation being maintained for a period of 48 hours.

9. The method, according to any one of claims 7 and 8, **characterised in that** precipitation is followed by drying at a temperature comprised between room temperature and 100 °C, followed by subsequent calcination at 300 °C for 4 hours with a ramp of 10°C/min.

10. The method, according to any one of claims 6 to 9, **characterised in that** the deposition of Au is performed by means of direct anionic exchange assisted by NH$_3$.

11. The method, according to claim 10, **characterised in that** it is based on an aqueous HAuCl$_4$ solution to which the support is added.

12. The method, according to any one of claims 6 to 9, **characterised in that** the deposition of Au is performed by means of deposition-precipitation.

13. The method, according to claim 12, **characterised in that** Au is deposited in the form of auric hydroxide on the oxide layers under agitation at a constant pH.

14. Use of a catalyst, as defined in claims 1 to 5, in the water-gas shift reaction.

15. The use, according to claim 14, **characterised in that** the reaction takes place in reactive streams having a composition comprising:

   - between 4.5 % and 9 % of CO,
   - between 0 % and 11 % of CO$_2$,
   - between 30 % and 50 % of H$_2$O.

16. The use, according to claims 14 and 15, **characterised in that** the reaction takes place at a temperature comprised between 140 and 350°C and at a spatial velocity between 4,000 and 8,000 h$^{-1}$.

Figure 1

Figure 2

Figure 3

# INTERNATIONAL SEARCH REPORT

| | International application No. |
|---|---|
| | PCT/ES2015/000138 |

A. CLASSIFICATION OF SUBJECT MATTER

**See extra sheet**

According to International Patent Classification (IPC) or to both national classification and IPC

B. FIELDS SEARCHED

Minimum documentation searched (classification system followed by classification symbols)
B01J, B01D, C01B, H01M

Documentation searched other than minimum documentation to the extent that such documents are included in the fields searched

Electronic data base consulted during the international search (name of data base and, where practicable, search terms used)

EPODOC, INVENES, WPI, XPESP, NPL,HCAPLUS

C. DOCUMENTS CONSIDERED TO BE RELEVANT

| Category* | Citation of document, with indication, where appropriate, of the relevant passages | Relevant to claim No. |
|---|---|---|
| P,X | PASUPULETY, Nagaraju, et al. Studies on Au/Cu–Zn–Al catalyst for methanol synthesis from CO 2. Applied Catalysis A: General, 25-02-2015 [online]; paragraph 2.2 | 1-12 |
| Y | NISHIDA, Kazufumi, et al. Effects of noble metal-doping on Cu/ZnO/Al 2 O 3 catalysts for water–gas shift reaction: catalyst preparation by adopting "memory effect" of hydrotalcite. Applied Catalysis A: General, 2008, vol. 337, no 1, p. 48-57; paragraphs 1-2. | 1-16 |
| Y | CASTAÑO, M. Gonzalez, et al. Pt vs. Au in water–gas shift reaction. Journal of Catalysis, 18-04-2014 [online], vol. 314, p. 1-9; paragraphs 1, 2 and 4, Table 1. | 1-16 |

☒ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 21/01/2016 | **(02/02/2016)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> V. Balmaseda Valencia <br><br><br> Telephone No. 91 3493048 |

Form PCT/ISA/210 (second sheet) (January 2015)

## INTERNATIONAL SEARCH REPORT

| International application No. |
|---|
| PCT/ES2015/000138 |

C (continuation). DOCUMENTS CONSIDERED TO BE RELEVANT

| Category * | Citation of documents, with indication, where appropriate, of the relevant passages | Relevant to claim No. |
|---|---|---|
| A | ALIHOSEINZADEH, Amir; KHODADADI, Abbas Ali; MORTAZAVI, Yadollah. Enhanced catalytic performance of Au/CuO–ZnO catalysts containing low CuO content for preferential oxidation of carbon monoxide in hydrogen-rich streams for PEMFC. International Journal of Hydrogen Energy, 31-12-2013 [online], vol. 39, n° 5, p. 2056-2066; paragraph 2. | 1-16 |
| A | CARABINEIRO, Sónia AC; TAVARES, Pedro B.; FIGUEIREDO, José L. Gold on oxide-doped alumina supports as catalysts for CO oxidation. Applied Nanoscience, 2012, vol. 2, no 1, p. 35-46; paragraph "Materials and Methods". | 1-16 |

Form PCT/ISA/210 (continuation of second sheet) (January 2015)

## INTERNATIONAL SEARCH REPORT

| International application No. |
| --- |
| PCT/ES2015/000138 |

### CLASSIFICATION OF SUBJECT MATTER

*B01J23/52* (2006.01)
*B01J23/72* (2006.01)
*B01J23/80* (2006.01)
*B01J21/04* (2006.01)
*B01D53/62* (2006.01)
*C01B3/16* (2006.01)
*H01M8/06* (2016.01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1797426 A
- US 20020147103 A
- US 20020061277 A
- US 6913739 B
- US 20030230029 A
- US 7964114 B2
- US 7947251 B2
- US 6627572 B1
- US 5021233 A

- US 2007128100 A
- US 2008089823 A
- US 2007269359 A
- WO 2005087656 A
- JP 20020129816 B
- JP 2004009011 B
- JP 2004066003 B
- KR 20040036106

**Non-patent literature cited in the description**

- **D. ANDREEVA ; I. IVANOV ; L. ILIEVA ; J.W. SOBCZAK ; G. AVDEEV ; T. TABAKOVA.** Nano-sized gold catalysts supported on ceria and ceria-alumina for WGS reaction: Influence of the preparation method. *Appl. Catal. A: Gen,* 2007, vol. 333, 153-160
- **ROBBIE BURCH.** Gold catalysts for pure hydrogen production in the water-gas shift reaction: Activity, structure and reaction mechanism. *Phys. Chem. Chem. Phys.,* 2006, vol. 8, 5483-5500

- **ANDREEVA, D. ; IVANOV, I. ; ILIEVA, L. ; SOBEZAK, J.W. ; AVDEEV, G. ; PETROV, K.** Gold-based catalysts on ceria and ceria-alumina for WGS reaction (WGS Gold catalysts. *Topics in Catalysis,* 2007, vol. 44 (1-2), 173-182
- **S. IVANOVA ; C. PETIT ; V. PITCHON.** A new preparation method for the formation of gold nanoparticles on an oxide support. *Applied Catalysis A-General,* 2004, vol. 267, 191-201
- **D. ANDREEVA ; T. TABAKOVA ; V. IDAKIEV ; P. CHRISTOV ; R. GIOVANOLI.** Au/alpha-Fe2O3 catalyst for water-gas shift reaction prepared by deposition-precipitation. *Applied Catalysis A-General,* 1998, vol. 169, 9-14